# EUROPEAN PATENT SPECIFICATION

(11) **EP 3 069 581 B1**
(45) Date of publication and mention of the grant of the patent: **20.01.2021**
(21) Application number: 14805448.9
(22) Date of filing: 12.11.2014
(51) Int. Cl.: H05H 1/34, B23K 9/095, B23K 9/10

(54) **AUTOMATED CARTRIDGE DETECTION FOR A PLASMA ARC CUTTING SYSTEM**
AUTOMATISIERTE KASSETTENERKENNUNG FÜR EIN PLASMASCHNEIDESYSTEM
DÉTECTION DE CARTOUCHE AUTOMATIQUE POUR UN SYSTÈME DE DÉCOUPAGE PAR JET DE PLASMA

(30) Priority: 13.11.2013 US 201314079163
(43) Date of publication of application: 21.09.2016
(60) Divisional application: 18192362.4
(73) Proprietor: Hypertherm, Inc., Hanover, NH 03755 (US)
(72) Inventor: BRINE, Erik, Hanover, NH 03755 (US); ROBERTS, Jesse, A., Cornish, NH 03745 (US); MAO, Junsong, Hanover, NH 03755 (US); HOFFA, Michael, Lebanon, NH 03766 (US); GOULD, Clayton, Orford, NH 03777 (US); TWAROG, Peter, J., Meriden, NH 03770 (US); SHIPULSKI, E., Michael, Etna, NH 03750 (US); LIEBOLD, Stephen, M., Grantham, NH 03753 (US); HANSEN, Brett, A., Mapleton, UT 84664 (US)
(74) Representative: Barker Brettell LLP
(86) International application number: PCT/US2014/065194
(87) International publication number: WO 2015/073522

(56) References cited:
- EP-A1- 1 117 279
- EP-A2- 0 508 482
- JP-A- S6 163 368
- US-A1- 2013 264 320

## Description

### FIELD OF THE INVENTION

The invention relates generally to the field of plasma arc cutting systems and processes. More specifically, the invention relates to methods and apparatuses for simplifying cutting tasks by automatically establishing cutting parameters of plasma arc cutting systems using consumable cartridges.

### BACKGROUND

Plasma arc torches are widely used in the cutting and marking of materials. A plasma torch generally includes an arc emitter (e.g. an electrode) and an arc constrictor (e.g. a nozzle) having a central exit orifice mounted within a torch body, electrical connections, passages for cooling, and passages for arc control fluids (e.g., plasma gas). The torch produces a plasma arc, a constricted ionized jet of a gas with high temperature and high momentum. Gases used in the torch can be non-reactive (e.g., argon or nitrogen) or reactive (e.g., oxygen or air). During operation, a pilot arc is first generated between the arc emitter (cathode) and the arc constrictor (anode). Generation of the pilot arc can be by means of a high frequency, high voltage signal coupled to a DC power supply and the torch or by means of any of a variety of contact starting methods.

Known plasma cutting systems include a large array of consumables for use with different cutting currents and/or operating modes. The large number of consumable options can confuse users and create the possibility of using incorrect consumables. The large number of consumable options can also cause torch setup time to be lengthy and can make it difficult to transition between cutting processes that require different arrangements of consumables. Furthermore, even after the appropriate consumable components are selected, the power supply must be configured with cutting parameters (e.g. values for cutting current, gas flow rate and/or operating mode) that are appropriate for the consumables chosen.

EP 1117279 A1 discloses a plasma torch comprising a cartridge and a system of recognition of the cartridge. US 2013 0264320 A1 discloses a torch tip with a system for transmitting a signal associated to the consumable components of the tip.

### SUMMARY OF THE INVENTION

The present invention addresses the unmet need for a plasma arc cutting system that simplifies the consumable selection process through the use of cartridges including consumables appropriate for a particular cutting task. The present invention also addresses the unmet need for a system that automatically establishes appropriate cutting parameters for the cutting task based upon the cartridge installed.

The present invention relates to systems and methods for establishing in a plasma arc cutting system, through installation of a consumable cartridge in a plasma arc cutting torch, at least one cutting parameter for the plasma arc cutting system (e.g. a cutting current, a gas pressure or gas flow rate, and/or an operational mode for the plasma arc cutting system). The present invention, in one detailed embodiment, enables appropriate cutting parameters for the plasma arc cutting system to be set with minimal action by the system operator (e.g., through installation of a cartridge). A cartridge has a housing, a connection mechanism for coupling the cartridge to a plasma arc torch, and components including at least an arc constrictor (e.g. a nozzle) and an arc emitter (e.g. an electrode), and optionally including a swirl ring or swirling feature, a shield, and/or a retaining cap. The cartridge also has an identification mechanism including information used to configure the plasma arc cutting system for a particular cutting task (e.g. a wireless identification mechanism such as a radio frequency identification (RFID) tag). The plasma arc cutting system has a reader (e.g. a RFID reader) for reading the information and permitting the plasma arc cutting system to be configured with appropriate cutting parameters based on the information read.

In one aspect, the invention features a replaceable cartridge for use with a plasma arc cutting system, according to claim 1.

In some embodiments, the identification mechanism is a radio frequency identification (RFID) mechanism. In some embodiments, the identification mechanism is a spring. In some embodiments, the identification mechanism is based on a dimension of an opening of the arc constrictor. In some embodiments, the at least one operating parameter includes at least one of a cutting current, a pilot arc current, a plasma gas flow or a shield gas flow. In some embodiments, the at least one operating parameter is further adjusted at a specified time during a cutting operation.

In some embodiments, the information comprises at least one operating parameter for the plasma arc cutting system. In some embodiments, the information denotes a cartridge type of the cartridge. In some embodiments, the cartridge type corresponds to a cutting persona of the plasma arc cutting system. In some embodiments, the information enables multiple operating parameters of the plasma arc cutting system to be set automatically.

In some embodiments, the cartridge includes a shield. In some embodiments, the cartridge includes a swirling feature or a swirl ring. In some embodiments, the cartridge includes a retaining cap. In some embodiments, the cartridge includes an exterior surface with a visual indicia corresponding to the cartridge type. In some embodiments, the visual indicia is a color. In some embodiments, the cartridge type corresponds to at least one of a workpiece thickness, a current output or a cutting process type.

In another aspect, the invention features a method for operating a plasma arc cutting system, according to claim 10.

In some embodiments, the identification mechanism is a RFID mechanism. In some embodiments, the identification mechanism is a spring. In some embodiments, the identification mechanism is based on a dimension of an opening of the arc constrictor. In some embodiments, the information comprises at least one operating parameter for the plasma arc cutting system. In some embodiments, the information denotes a cartridge type of the cartridge. In some embodiments, the cartridge type corresponds to a cutting persona of the plasma arc cutting system.

In some embodiments, setting at least one operating parameter of the plasma arc cutting system further comprises correlating the information with at least one operating parameter of the plasma arc cutting system via a lookup table. In some embodiments, the at least one operating parameter includes at least one of a cutting current, a pilot arc current, a plasma gas flow or a shield gas flow. In some embodiments, the plasma arc cutting system sets multiple operating parameters based on a particular combination of consumable components of the cartridge.

In some embodiments, the method includes installing a different cartridge in the plasma arc torch. The different cartridge includes a different arc constrictor, a different arc emitter, and a different identification mechanism. In some embodiments, the method includes communicating different information between the different identification mechanism and a reader of the plasma arc cutting system. In some embodiments, the method includes setting at least one different operating parameter of the plasma arc cutting system based on the communicated different information.

In another aspect, the invention features a plasma arc cutting system, according to claim 13.

In some embodiments, the identification mechanism is a RFID device. In some embodiments, the information communicated between the identification mechanism and the detection mechanism comprises at least one operating parameter of the plasma arc cutting system. In some embodiments, the at least one operating parameter includes at least one of a cutting current, a pilot arc current, a plasma gas flow or a shield gas flow. In some embodiments, the information communicated between the identification mechanism and the detection mechanism denotes a cartridge type of the cartridge. In some embodiments, the cartridge type corresponds to a cutting persona of the plasma arc cutting system. In some embodiments, the information communicated between the identification mechanism and the detection mechanism comprises or is correlated with a workpiece thickness. In some embodiments, the information is communicated to the power supply. In some embodiments, the means for setting at least one operating parameter of the plasma arc cutting system includes the power supply. In some embodiments, the plasma arc cutting system establishes multiple operating parameters system based on a particular combination of consumable components of the cartridge.

### BRIEF DESCRIPTION OF THE DRAWINGS

The foregoing discussion will be understood more readily from the following detailed description of the invention when taken in conjunction with the accompanying drawings.
Figures 1A-1B are cross-sectional illustrations of cartridges for a plasma arc cutting system, according to an illustrative embodiment of the invention.
Figure 2 is a schematic of a plasma arc cutting system, according to an illustrative embodiment of the invention.
Figures 3A-3C are illustrations of exterior views of cartridges for a plasma arc cutting system, according to an illustrative embodiment of the invention.
Figure 4 is a flow diagram of a method of detecting a cartridge in a plasma arc cutting torch of a plasma arc cutting system and setting cutting parameters for a plasma arc cutting system, according to an illustrative embodiment of the invention.

### DETAILED DESCRIPTION OF THE DRAWINGS

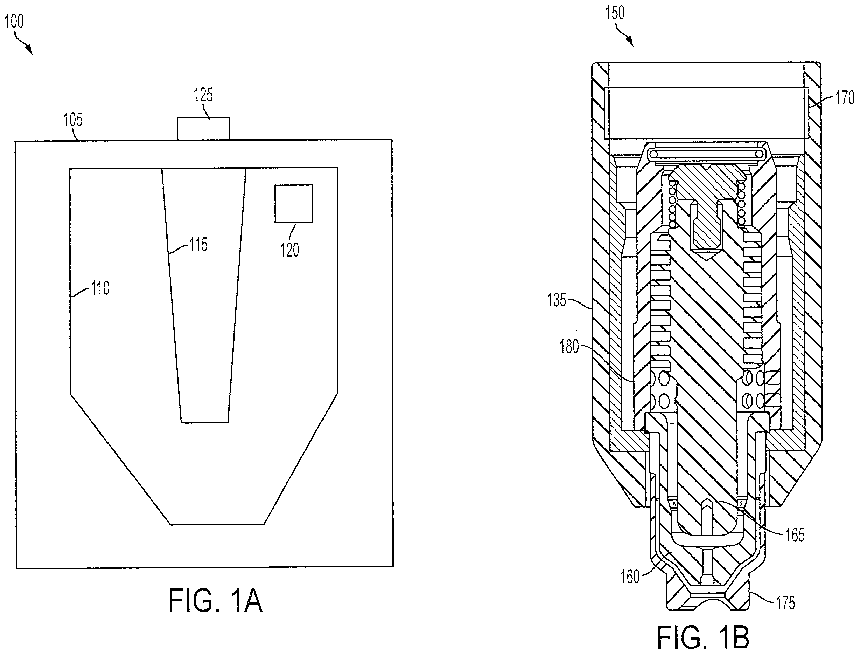

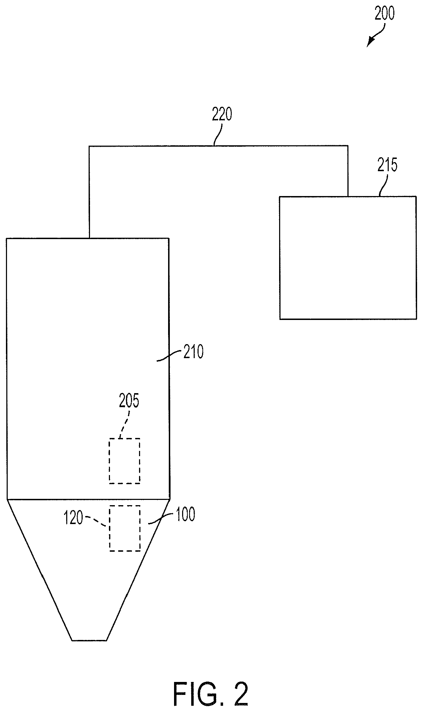

Figures 1A-1B are cross-sectional illustrations of cartridges 100, 150 for a plasma arc cutting system (e.g. plasma arc cutting system 200 as shown below in Figure 2), according to an illustrative embodiment of the invention. Figure 1A shows a cartridge 100 that includes a housing 105, a arc constrictor 110, an arc emitter 115, and an identification mechanism 120. The arc constrictor 110, the arc emitter 115, and/or the identification mechanism 120 can be disposed within the housing 105. The cartridge 100 can have a connection mechanism 125 for coupling the cartridge 100 to a plasma arc torch (e.g. plasma arc torch 210 as shown below in Figure 2). Figure 1B shows a cartridge 150 that includes a housing 135, an arc constrictor 160, an arc emitter 165, and an identification mechanism 170.

In some embodiments the cartridge 150 includes one or more of the following additional components: a shield 175; a swirling feature 180; and/or a retaining cap (not shown). The arc constrictor 110, 160 includes a nozzle. The arc emitter 115, 165 includes an electrode. In some embodiments the geometry of an orifice of the arc constrictor 110, 160 and/or the geometry of the swirling feature 180 is optimized for a particular cutting or gouging process. In some embodiments a hafnium emitter of the arc emitter 115, 165 can be optimized for a specific cutting or gouging process. The housing 105 includes any component that holds the cartridge 100, 150 together, e.g. a nozzle body, swirl ring or separate element. In some embodiments, the connection mechanism 125 is a magnet, a thread, a lip, a latch, or any other mechanism capable of attaching the cartridge 150 to a torch (not shown). In some embodiments, the connection mechanism 125 is a retaining cap.

The identification mechanism 120, 170 includes information that can be communicated to a reader of a plasma arc cutting system (e.g. reader or detection mechanism 205 as shown below in Figure 2). The plasma arc cutting system then can use the information to automatically set at least one operating parameter of the plasma arc cutting system, as described below in Figure 2.

Figure 2 is a schematic of a plasma arc cutting system 200, according to an illustrative embodiment of the invention. The plasma arc cutting system 200 includes a cartridge 100, a plasma arc torch 210 and a plasma power supply 215. The plasma arc torch 210 is in electrical communication with the plasma power supply 215 via electrical connection 220. The plasma arc torch 210 includes a detection mechanism 205 configured to read information provided by identification mechanism 120.

When the cartridge 100 is installed in the plasma arc torch 210, the detection mechanism 205 reads the information contained in the identification mechanism 120 and passes the information to the plasma power supply 215. In some embodiments, the detection mechanism 205 sends a signal to the plasma power supply 215, e.g. via electrical connection 220. In some embodiments the detection mechanism 205 sends a signal to the power supply wirelessly. The plasma power supply 215 then configures at least one operating parameter of the plasma arc cutting system 200 based on the information read. For example, the plasma power supply 215 can configure the operating current, the gas pressure, current controls (e.g. continuous pilot arc), and/or gas controls (e.g. gas ramping) based on the information read. The system is thus configured automatically without the need for further action by the operator.

In some embodiments, the identification mechanism 120 includes information that identifies the type of cartridge 100 installed. The cartridge type can be correlated with a certain cutting task for which (i) a particular combination of consumables contained in the cartridge 100 is best suited, and/or (ii) particular plasma system settings are best suited. For example, for the task of cutting fine features in sheet metal, it would be appropriate to use a cartridge containing a relatively small arc constrictor orifice with features capable of imparting a high swirling gas strength that configured the plasma arc cutting system 200 with a lower cutting current appropriate to the arc constrictor orifice size and a moderate gas flow. As another example, for the task of gouging a thick, heavy plate of steel, it would be appropriate to use a cartridge containing a relatively large arc constrictor orifice with features capable of imparting a low swirling gas strength that configured the plasma arc cutting system 200 with a higher cutting current appropriate to the arc constrictor orifice size and a large gas flow to adequately remove the molten steel.

In some embodiments, the information stored by identification mechanism 120 denotes a cartridge type of the cartridge 100. The plasma arc cutting system 200 can use the cartridge type to select appropriate plasma system cutting parameters using a lookup table stored in memory of the plasma power supply 215. For example, if the plasma arc cutting system 200 receives information that cartridge type A is installed, it can use the lookup table to determine that cartridge type A is to be used with a specific cutting current, gas flow rate and/or cutting mode and configure the plasma arc cutting system 200 accordingly. On the other hand, if the plasma arc cutting system 200 receives information that cartridge type B is installed, it can use the lookup table to configure the plasma arc cutting system 200 with a different set of system parameters. In some embodiments, the identification mechanism 120 stores operational parameters for the plasma arc cutting system 200. For example, the identification mechanism can include information comprising specific values for a cutting current, a pilot arc current, a plasma gas flow rate, a shield gas flow rate, and/or cutting mode, or other plasma system parameters. The plasma arc cutting system 200 can then use this information to set the specified values. In some embodiments, the identification mechanism 120 can store historical data or performance characteristics of the cartridge. For example, the identification mechanism 120 can include information comprising the number of start cycles, the number of arc-hours, the arc voltage or other data or performance characteristics.

In some embodiments, the identification mechanism 120 is a RFID tag. The RFID tag can store information in the form of digital data. The detection mechanism 205 can be a RFID reader capable of reading the digital data. In some embodiments, the identification mechanism 120 is a physical feature of the cartridge. For example, a keyed type feature on the cartridge can be detected by the plasma arc torch 210. In some embodiments, the identification mechanism 120 is a spring that can be identified according to a spring constant (k). In some embodiments the information of the identification mechanism 120 is based on a voltage change, a blowback pressure, or another feature capable of differentiating multiple consumable cartridges. One of ordinary skill in the art would understand that the information in the identification mechanism can be encoded in a variety of physical forms and interpreted by a variety of corresponding readers suitable for use with a plasma arc cutting system.

In some embodiments, the plasma power supply 215 is a power printed circuit board ("PCB") that can comprise most of the power components. In some embodiments, the plasma power supply 215 includes a controller, e.g. a microcontroller, a central processing unit ("CPU") controller, a digital signal processor ("DSP") controller, or any other type of controller that is capable of controlling the applicable plasma system settings. In some embodiments, the plasma power supply 215 is controlled by a remote controller, for example, a computer numeric controller ("CNC").

Using the current invention, an operator of the plasma arc cutting system 200 needs only to select and install a consumable cartridge 100 based on the specific cutting job desired. System controls can be simplified or removed entirely from the plasma arc cutting system 200, as the operator does not need to configure the power supply settings. Thus, setup time can be greatly reduced. Table 1 shows test results for a novice user for the selection and installation of individual consumables known in the art compared to the selection and installation of a consumable cartridge for specific cutting processes. As shown, the time taken to select the correct consumables for the specific job was substantially shorter using the automated consumable cartridge.

**Table 1:**

| User | Task | Time |
|---|---|---|
| User 1 | Install individual mechanized cutting consumables | 11:50 |
| User 1 | Install mechanized cutting cartridge | 1:13 |
| User 2 | Install individual hand cutting consumables | 8:00 |
| User 2 | Install hand cutting cartridge | 2:07 |

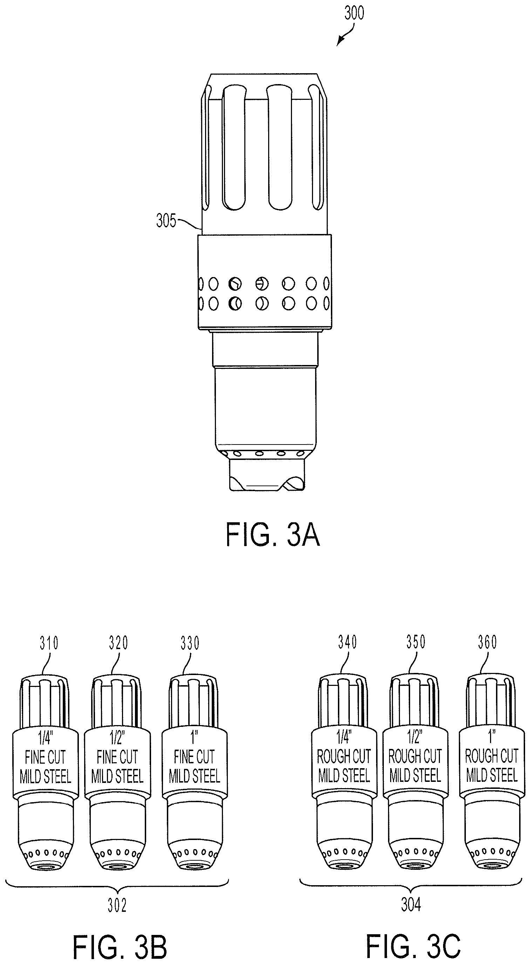

Figures 3A-3C are illustrations of exterior views of cartridges 300, 310, 320, 330, 340, 350, 360 for a plasma arc cutting system (e.g. plasma arc cutting system 200 as shown above in Figure 2), according to an illustrative embodiment of the invention. Figure 3A shows a cartridge 300 including a housing 305. In some embodiments the cartridges are provided with a visual indicia of the cut to be performed. In some embodiments the cartridges are color coded or labeled with another intuitive indicator of the cut to be performed (e.g. an icon). In some embodiments, cartridges having consumable sets that encompass a range of currents and type of cutting processes can be provided for selection by an operator. In some embodiments the cartridges 300, 310, 320, 330, 340, 350, 360 include an additional retaining cap.

In some embodiments, in addition to being optimized for a particular cutting task, a cartridge may be optimized for a particular thickness of a given workpiece material. For example, Figures 3B-3C each show a set of three consumable cartridges that are optimized for a specific cutting task and are optimized for different workpiece thicknesses. Figure 3B shows a cartridge set 302 that is intended for fine cutting of mild steel. The cartridge 310 is optimized for cutting ¼ inch (0.635 cm) steel; the cartridge 320 is optimized for cutting ½ inch (1.27 cm) steel; the cartridge 330 is optimized for cutting 1 inch (2,54 cm) steel. Figure 3C shows a cartridge set 304 that is intended for rough cutting of mild steel. The cartridge 340 is optimized for cutting ¼ inch (0.635 cm) steel; the cartridge 350 is optimized for cutting ½ inch (1.27 cm) steel; the cartridge 360 is optimized for cutting 1 inch (2,54 cm) steel. For example, for each set of consumable cartridges an arc constrictor (e.g. nozzle) orifice may be sized to cut ¼ inch (0.635 cm) steel with a cutting current of 60 Amps; sized to cut ½ inch (1.27 cm) steel with a cutting current of 80 Amps; and/or sized to cut 1 inch (2,54 cm) steel with a cutting current of 100 Amps.

In some embodiments the consumables cartridges can be designed for each "cutting persona" as described in Application No. 13/949,364, filed on July 24, 2013. A "cutting persona" is a set of parameters for a plasma arc cutting system that are customized for a particular kind of cut. For example, one user may want to cut as fast as possible and sacrifice consumable life. For this type of cut, a cutting persona that establishes a high current and gas flow can be desirable. Another user, such as one who is using a computer numeric controller ("CNC")-controlled table mounted system, may want to select a cutting persona optimized for long life or fine cutting. For this type of cut, a cutting persona that establishes a low current and/or gas flow rate can be desirable.

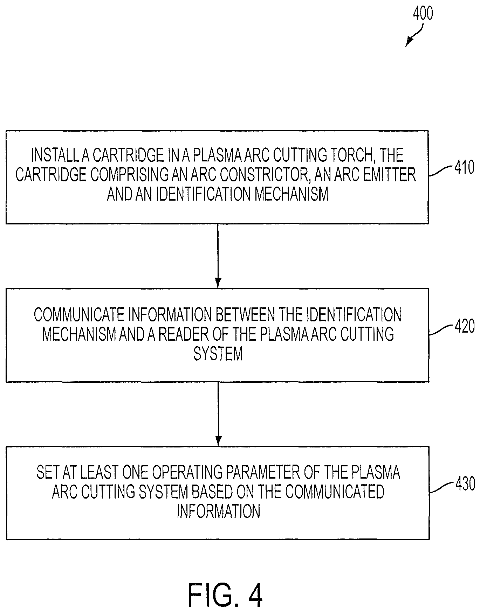

Figure 4 is a flow diagram of a method 400 of detecting a cartridge in a plasma arc cutting torch of a plasma arc cutting system and setting cutting parameters for a plasma arc cutting system, according to an illustrative embodiment of the invention. In a first step 410, a cartridge comprising an arc constrictor, an arc emitter and an identification mechanism is installed in a plasma arc cutting torch. In a second step 420, information is communicated between the identification mechanism and a reader of the plasma arc cutting torch. In a third step 430, at least one operating parameter of a plasma arc cutting system is set based on the communicated information.

While the invention has been particularly shown and described with reference to specific preferred embodiments, it should be understood by those skilled in the art that various changes in form and detail may be made therein without departing from the scope of the invention as defined by the following claims.

## Claims

1. A replaceable cartridge (100, 150, 300, 310, 320, 330, 340, 350, 360) for use with a plasma arc cutting system comprising a plasma arc torch, the cartridge comprising the following components:
a housing (105, 305) comprising a swirl ring that is configured to hold the components of the replaceable cartridge together;
a connection mechanism (125) for coupling the housing (105, 305) to the plasma arc torch;
a nozzle (110, 160) connected to the housing (105, 305);
an electrode (115, 165) disposed within the housing (105, 305); and
an identification mechanism (120, 170) disposed within the housing (105, 305) and configured to store information and communicate the information to a detecting mechanism (205) of the plasma arc cutting system, wherein the information allows to enable the plasma arc cutting system to automatically set at least one operating parameter of the plasma arc cutting system,
wherein the information denotes a cartridge type of the replaceable cartridge or includes information comprising specific values for a cutting current, a pilot arc current, a plasma gas flow rate, a shield gas flow rate, or a cutting mode, the information corresponding to a particular combination of consumable components of the replaceable cartridge.

2. The cartridge of claim 1 wherein any one or more of the following applies,
a) the identification mechanism (120, 170) is a radio frequency identification (RFID) mechanism;
b) the identification mechanism (120, 170) is a spring;
c) the identification mechanism (120, 170) is based on a dimension of an opening of the nozzle (110, 160);
d) the information comprises at least one operating parameter for the plasma arc cutting system;
e) wherein the information allows to enable multiple operating parameters of the plasma arc cutting system to be set automatically;
f) the cartridge (150) further comprising a shield (175); and
g) the cartridge (150) further comprising a retaining cap.

3. The cartridge of claim 1 wherein the at least one operating parameter includes at least one of a cutting current, a pilot arc current, a plasma gas flow or a shield gas flow.

4. The cartridge of claim 3 wherein the information allows to enable the plasma arc cutting system to further adjust the at least one operating parameter at a specified time during a cutting operation.

5. The cartridge of claim 1 wherein the information denotes a cartridge type of the cartridge.

6. The cartridge of claim 5 wherein the cartridge type corresponds to a cutting persona of the plasma arc cutting system.

7. The cartridge of claim 5, further comprising an exterior surface with a visual indicia corresponding to the cartridge type.

8. The cartridge of claim 7 wherein the visual indicia is a color.

9. The cartridge of claim 5 wherein the cartridge type corresponds to at least one of a workpiece thickness, a current output or a cutting process type.

10. A method (400) for operating a plasma arc cutting system, the method comprising:
installing (410) a cartridge in a plasma arc cutting torch, the cartridge is the replaceable cartridge of claim 1;
communicating information (420) between the identification mechanism and a detection mechanism (205) of the plasma arc cutting system; and
setting at least one operating parameter (430) of the plasma arc cutting system based on the communicated information,
wherein the information denotes a cartridge type of the replaceable cartridge or includes information comprising specific values for a cutting current, a pilot arc current, a plasma gas flow rate, a shield gas flow rate, or a cutting mode, the information corresponding to a particular combination of consumable components of the replaceable cartridge.

11. The method of claim 10 wherein any one or more of the following applies:
a) the identification mechanism is a RFID mechanism;
b) the identification mechanism is a spring;
c) the identification mechanism is based on a dimension of an opening of the nozzle;
d) the information comprises at least one operating parameter for the plasma arc cutting system;
e) the information denotes a cartridge type of the cartridge;
f) the cartridge type corresponds to a cutting persona of the plasma arc cutting system;
g) setting at least one operating parameter of the plasma arc cutting system further comprises correlating the information with at least one operating parameter of the plasma arc cutting system via a lookup table;
h) the at least one operating parameter includes at least one of a cutting current, a pilot arc current, a plasma gas flow or a shield gas flow; and
i) the plasma arc cutting system sets multiple operating parameters based on a particular combination of consumable components of the cartridge.

12. The method of claim 10 further comprising:
installing a different cartridge in the plasma arc torch, the different cartridge comprising a different nozzle, a different electrode, and a different identification mechanism;
communicating different information between the different identification mechanism and a reader of the plasma arc cutting system; and
setting at least one different operating parameter of the plasma arc cutting system based on the communicated different information.

13. A plasma arc cutting system (200) comprising:
a power supply (215) for supplying a cutting current;
a plasma arc cutting torch (210) in electrical communication with the power supply (215);
a detection mechanism (205);
a cartridge in accordance with claim 1 comprising the identification mechanism (120) configured to provide information to the plasma arc cutting system (200) via communication between the identification mechanism (120) and the detection mechanism (205); and
a means for setting at least one operating parameter of the plasma arc cutting system (200) based on the information communicated between the identification mechanism (120) and the detection mechanism (205).

14. The plasma arc cutting system of claim 13 wherein any one or more of the following applies,
a) the identification mechanism (120) is a RFID device;
b) the information communicated between the identification mechanism (120) and the detection mechanism (205) comprises at least one operating parameter of the plasma arc cutting system (200), wherein optionally the at least one operating parameter includes at least one of a cutting current, a pilot arc current, a plasma gas flow or a shield gas flow;
c) the information communicated between the identification mechanism (120) and the detection mechanism (205) denotes a cartridge type of the cartridge, wherein optionally the cartridge type corresponds to a cutting persona of the plasma arc cutting system (200);
d) the information communicated between the identification mechanism (120) and the detection mechanism (205) comprises or is correlated with a workpiece thickness;
e) the information is communicated to the power supply (215);
f) the means for setting at least one operating parameter of the plasma arc cutting system (200) comprises the power supply (215); and
g) the plasma arc cutting system (200) establishes multiple operating parameters based on a particular combination of consumable components of the cartridge.

15. The cartridge of claim 1 wherein the cartridge is one of a plurality of consumable cartridges that are optimized for a specific cutting task and are optimized for different workpiece thicknesses.

## Patentansprüche

1. Austauschbare Kartusche (100, 150, 300, 310, 320, 330, 340, 350, 360) zur Verwendung mit einem Plasmaschneidsystem, das einen Plasmabrenner umfasst, wobei die Kartusche die folgenden Komponenten umfasst:
ein Gehäuse (105, 305) mit einem Wirbelring, der dafür ausgelegt ist, die Komponenten der austauschbaren Kartusche zusammenzuhalten;
einen Verbindungsmechanismus (125) zum Koppeln des Gehäuses (105, 305) mit dem Plasmabrenner;
eine Düse (110, 160), die mit dem Gehäuse (105, 305) verbunden ist;
eine Elektrode (115, 165), die innerhalb des Gehäuses (105, 305) angeordnet ist; und
einen Identifikationsmechanismus (120, 170), der innerhalb des Gehäuses (105, 305) angeordnet und dafür ausgelegt ist, Informationen zu speichern und die Informationen an einen Erkennungsmechanismus (205) des Plasmaschneidsystems zu übermitteln, wobei die Informationen es ermöglichen, das Plasmaschneidsystem in die Lage zu versetzen, wenigstens einen Betriebsparameter des Plasmaschneidsystems automatisch einzustellen,
wobei die Informationen einen Kartuschentyp der austauschbaren Kartusche bezeichnen oder Informationen enthalten, die spezifische Werte für einen Schneidstrom,
einen Pilotbogenstrom, eine Plasmagas-Strömungsgeschwindigkeit, eine Schutzgas-Strömungsgeschwindigkeit oder eine Schneidbetriebsart umfassen, wobei die Informationen einer bestimmten Kombination von Verbrauchsmaterialkomponenten der austauschbaren Kartusche entsprechen.

2. Kartusche nach Anspruch 1, wobei eines oder mehrere der folgenden zutreffen:
a) der Identifikationsmechanismus (120, 170) ist ein Hochfrequenz-Identifikations (RFID, Radio Frequency Identification) -Mechanismus;
b) der Identifikationsmechanismus (120, 170) ist eine Feder;
c) der Identifikationsmechanismus (120, 170) basiert auf einer Abmessung einer Öffnung der Düse (110, 160);
d) die Informationen umfassen wenigstens einen Betriebsparameter für das Plasmaschneidsystem;
e) wobei die Informationen es ermöglichen, dass mehrere Betriebsparameter des Plasmaschneidsystems automatisch eingestellt werden können;
f) wobei die Kartusche (150) ferner einen Schild (175) umfasst; und
g) die Kartusche (150) ferner eine Rückhaltekappe umfasst.

3. Kartusche nach Anspruch 1, wobei der wenigstens eine Betriebsparameter wenigstens eines von einem Schneidstrom, einem Pilotbogenstrom, einem Plasmagasstrom oder einem Schutzgasstrom beinhaltet.

4. Kartusche nach Anspruch 3, wobei die Informationen es dem Plasmaschneidsystem ermöglichen, den wenigstens einen Betriebsparameter zu einem bestimmten Zeitpunkt während eines Schneidvorgangs weiter anzupassen.

5. Kartusche nach Anspruch 1, wobei die Informationen einen Kartuschentyp der Kartusche bezeichnen.

6. Kartusche nach Anspruch 5, wobei der Kartuschentyp einem Schneidprofil des Plasmaschneidsystems entspricht.

7. Kartusche nach Anspruch 5, die ferner eine Außenfläche mit einer visuellen Kennzeichnung entsprechend dem Kartuschentyp umfasst.

8. Kartusche nach Anspruch 7, wobei die visuelle Kennzeichnung eine Farbe ist.

9. Kartusche nach Anspruch 5, wobei der Kartuschentyp wenigstens einem von Werkstückdicke, Stromausgang oder Schneidprozesstyp entspricht.

10. Verfahren (400) zum Betreiben eines Plasmaschneidsystems, wobei das Verfahren umfasst:
Einsetzen (410) einer Kartusche in einen Plasmabrenner, wobei die Kartusche die austauschbare Kartusche nach Anspruch 1 ist;
Übermitteln von Informationen (420) zwischen dem Identifikationsmechanismus und einem Erkennungsmechanismus (205) des Plasmaschneidsystems; und
Einstellen wenigstens eines Betriebsparameters (430) des Plasmaschneidsystems basierend auf den übermittelten Informationen,
wobei die Informationen einen Kartuschentyp der austauschbaren Kartusche bezeichnen oder Informationen enthalten, die spezifische Werte für einen Schneidstrom, einen Pilotbogenstrom, eine Plasmagas-Strömungsgeschwindigkeit, eine Schutzgas-Strömungsgeschwindigkeit oder eine Schneidbetriebsart umfassen, wobei die Informationen einer bestimmten Kombination von Verbrauchsmaterialkomponenten der austauschbaren Kartusche entsprechen.

11. Verfahren nach Anspruch 10, wobei eines oder mehrere der folgenden zutreffen:
a) der Identifikationsmechanismus ist ein RFID-Mechanismus;
b) der Identifikationsmechanismus ist eine Feder;
c) der Identifikationsmechanismus basiert auf einer Abmessung einer Öffnung der Düse;
d) die Informationen umfassen wenigstens einen Betriebsparameter für das Plasmaschneidsystem;
e) die Informationen bezeichnen einen Kartuschentyp der Kartusche;
f) der Kartuschentyp entspricht einem Schneidprofil des Plasmaschneidsystems;
g) das Einstellen wenigstens eines Betriebsparameters des Plasmaschneidsystems umfasst ferner das Korrelieren der Informationen mit wenigstens einem Betriebsparameter des Plasmaschneidsystems über eine Nachschlagetabelle;
h) der wenigstens eine Betriebsparameter beinhaltet wenigstens eines von einem Schneidstrom, einem Pilotbogenstrom, einem Plasmagasstrom oder einem Schutzgasstrom; und
i) das Plasmaschneidsystem stellt mehrere Betriebsparameter basierend auf einer bestimmten Kombination von Verbrauchsmaterialkomponenten der Kartusche ein.

12. Verfahren nach Anspruch 10, ferner umfassend:
Einsetzen einer anderen Kartusche in den Plasmabrenner, wobei die andere Kartusche eine andere Düse, eine andere Elektrode und einen anderen Identifikationsmechanismus umfasst;
Übermitteln anderer Informationen zwischen dem anderen Identifikationsmechanismus und einer Lesevorrichtung des Plasmaschneidsystems; und
Einstellen wenigstens eines anderen Betriebsparameters des Plasmaschneidsystems basierend auf den übermittelten anderen Informationen.

13. Plasmaschneidsystem (200), umfassend:
eine Stromversorgung (215) zur Bereitstellung eines Schneidstroms;
einen Plasmabrenner (210) in elektrischer Kommunikationsverbindung mit der Stromversorgung (215);
einen Erkennungsmechanismus (205);
eine Kartusche gemäß Anspruch 1, die den Identifikationsmechanismus (120) umfasst, der dafür ausgelegt ist, dem Plasmaschneidsystem (200) über die Kommunikation zwischen dem Identifikationsmechanismus (120) und dem Erkennungsmechanismus (205) Informationen bereitzustellen; und
ein Mittel zum Einstellen wenigstens eines Betriebsparameters des Plasmaschneidsystems (200) basierend auf den Informationen, die zwischen dem Identifikationsmechanismus (120) und dem Erkennungsmechanismus (205) übermittelt werden.

14. Plasmaschneidsystem nach Anspruch 13, wobei eines oder mehrere der folgenden zutreffen:
a) der Identifikationsmechanismus (120) ist eine RFID-Vorrichtung;
b) die Informationen, die zwischen dem Identifikationsmechanismus (120) und dem Erkennungsmechanismus (205) übermittelt werden, umfassen wenigstens einen Betriebsparameter des Plasmaschneidsystems (200), wobei optional der wenigstens eine Betriebsparameter wenigstens eines von einem Schneidstrom, einem Pilotbogenstrom, einem Plasmagasstrom oder einem Schutzgasstrom beinhaltet;
c) die Informationen, die zwischen dem Identifikationsmechanismus (120) und dem Erkennungsmechanismus (205) übermittelt werden, bezeichnen einen Kartuschentyp der Kartusche, wobei optional der Kartuschentyp einem Schneidprofil des Plasmaschneidsystems (200) entspricht;
d) die Informationen, die zwischen dem Identifikationsmechanismus (120) und dem Erkennungsmechanismus (205) übermittelt werden, umfassen eine Werkstückdicke oder sind mit dieser korreliert,
e) die Informationen werden an die Stromversorgung (215) übermittelt;
f) das Mittel zum Einstellen wenigstens eines Betriebsparameters des Plasmaschneidsystems (200) umfasst die Stromversorgung (215); und
g) das Plasmaschneidsystem (200) richtet mehrere Betriebsparameter basierend auf einer bestimmten Kombination von Verbrauchsmaterialkomponenten der Kartusche ein.

15. Kartusche nach Anspruch 1, wobei die Kartusche eine von mehreren Verbrauchsmaterialkartuschen ist, die für eine bestimmte Schneidaufgabe optimiert sind und für unterschiedliche Werkstückdicken optimiert sind.

## Revendications

1. Cartouche remplaçable (100, 150, 300, 310, 320, 330, 340, 350, 360) destinée à être utilisée avec un système de coupage par plasma d'arc, comprenant une torche à plasma, la cartouche comprenant les composants suivants :
un boîtier (105, 305) comprenant une bague de turbulence qui est configurée pour maintenir solidaires les composants de la cartouche remplaçable ;
un mécanisme de liaison (125) destiné à accoupler le boîtier (105, 305) à la torche à plasma d'arc ;
une buse (110, 160) reliée au boîtier (105, 305) ;
une électrode (115, 165) placée à l'intérieur du boîtier (105, 305) ; et
un mécanisme d'identification (120, 170) placé à l'intérieur du boîtier (105, 305) et configuré pour stocker des informations et communiquer les informations à un mécanisme de détection (205) du système de coupage par plasma d'arc, les informations servant à permettre au système de coupage par plasma d'arc de régler automatiquement au moins un paramètre de fonctionnement du système de coupage par plasma d'arc,
les informations indiquant un type de cartouche de la cartouche remplaçable ou comportant des informations comprenant des valeurs spécifiques d'un courant de coupage, d'un courant d'arc pilote, d'un débit de gaz plasma, d'un débit de gaz protecteur ou d'un mode de coupage, les informations correspondant à une combinaison particulière de composants consommables de la cartouche remplaçable.

2. Cartouche selon la revendication 1, dans laquelle l'une quelconque ou plusieurs des dispositions suivantes s'appliquent :
a) le mécanisme d'identification (120, 170) est un mécanisme d'identification radiofréquence (RFID) ;
b) le mécanisme d'identification (120, 170) est un ressort ;
c) le mécanisme d'identification (120, 170) est basé sur une dimension d'une ouverture de la buse (110, 160) ;
d) les informations comprennent au moins un paramètre de fonctionnement pour le système de coupage par plasma d'arc ;
e) les informations servant à permettre de régler automatiquement des paramètres de fonctionnement multiples du système de coupage par plasma d'arc ;
f) la cartouche (150) comprenant en outre une protection (175) ; et
g) la cartouche (150) comprenant en outre un embout de retenue.

3. Cartouche selon la revendication 1, dans laquelle l'au moins un paramètre de fonctionnement comporte un courant de coupage et/ou un courant d'arc pilote et/ou un débit de gaz plasma et/ou un débit de gaz protecteur.

4. Cartouche selon la revendication 3, dans laquelle les informations servent à permettre au système de coupage par plasma d'arc d'ajuster davantage l'au moins un paramètre de fonctionnement à un instant spécifié au cours d'une opération de coupage.

5. Cartouche selon la revendication 1, dans laquelle les informations indiquent un type de cartouche de la cartouche.

6. Cartouche selon la revendication 5, dans laquelle le type de cartouche correspond à un profil de coupage personnalisé du système de coupage par plasma d'arc.

7. Cartouche selon la revendication 5, comprenant en outre une surface extérieure pourvue d'une indication visuelle correspondant au type de cartouche.

8. Cartouche selon la revendication 7, dans laquelle l'indication visuelle consiste en une couleur.

9. Cartouche selon la revendication 5, dans laquelle le type de cartouche correspondant à une épaisseur de pièce à usiner et/ou une sortie de courant et/ou un type de processus de coupage.

10. Procédé (400) permettant de faire fonctionner un système de coupage par plasma d'arc, le procédé comprenant :
l'installation (410) d'une cartouche dans une torche à plasma d'arc, la cartouche consistant en la cartouche remplaçable selon la revendication 1 ;
la communication d'informations (420) entre le mécanisme d'identification et un mécanisme de détection (205) du système de coupage par plasma d'arc ; et
le réglage d'au moins un paramètre de fonctionnement (430) du système de coupage par plasma d'arc sur la base des informations communiquées,
les informations indiquant un type de cartouche de la cartouche remplaçable ou comportant des informations comprenant des valeurs spécifiques d'un courant de coupage, d'un courant d'arc pilote, d'un débit de gaz plasma, d'un débit de gaz protecteur ou d'un mode de coupage, les informations correspondant à une combinaison particulière de composants consommables de la cartouche remplaçable.

11. Procédé selon la revendication 10, dans lequel l'une quelconque ou plusieurs des dispositions suivantes s'appliquent :
a) le mécanisme d'identification est un mécanisme RFID ;
b) le mécanisme d'identification est un ressort ;
c) le mécanisme d'identification est basé sur une dimension d'une ouverture de la buse ;
d) les informations comprennent au moins un paramètre de fonctionnement pour le système de coupage par plasma d'arc ;
e) les informations indiquent un type de cartouche de la cartouche ;
f) le type de cartouche correspond à un profil de coupage personnalisé du système de coupage par plasma d'arc ;
g) le réglage d'au moins un paramètre de fonctionnement du système de coupage par plasma d'arc comprend en outre la corrélation des informations avec au moins un paramètre de fonctionnement du système de coupage par plasma d'arc par le biais d'une table de correspondance ;
h) l'au moins un paramètre de fonctionnement comporte un courant de coupage et/ou une courant d'arc pilote et/ou un écoulement de gaz plasma et/ou un écoulement de gaz protecteur ; et
i) le système de coupage par plasma d'arc règle des paramètres de fonctionnement multiples sur la base d'une combinaison particulière de composants consommables de la cartouche.

12. Procédé selon la revendication 10, comprenant en outre :
l'installation d'une cartouche différente dans la torche à plasma d'arc, la cartouche différente comprenant une buse différente, une électrode différente et un mécanisme d'identification différent ;
la communication d'informations différentes entre le mécanisme d'identification différent et un lecteur du système de coupage par plasma d'arc ; et
le réglage d'au moins un paramètre de fonctionnement différent du système de coupage par plasma d'arc sur la base des informations différentes communiquées.

13. Système de coupage par plasma d'arc (200), comprenant :
une alimentation électrique (215) destinée à fournir un courant de coupage ;
une torche de coupage à plasma d'arc (210) en communication électrique avec l'alimentation électrique (215) ;
un mécanisme de détection (205) ;
une cartouche selon la revendication 1 comprenant le mécanisme d'identification (120) configuré pour fournir des informations au système de coupage par plasma d'arc (200) par le biais d'une communication entre le mécanisme d'identification (120) et le mécanisme de détection (205) ; et
un moyen de réglage d'au moins un paramètre de fonctionnement du système de coupage par plasma d'arc (200) sur la base des informations communiquées entre le mécanisme d'identification (120) et le mécanisme de détection (205).

14. Système de coupage par plasma d'arc selon la revendication 13, dans lequel l'une quelconque ou plusieurs des dispositions suivantes s'appliquent :
a) le mécanisme d'identification (120) est un dispositif RFID ;
b) les informations communiquées entre le mécanisme d'identification (120) et le mécanisme de détection (205) comprennent au moins un paramètre de fonctionnement du système de coupage par plasma d'arc (200), éventuellement l'au moins un paramètre de fonctionnement comportant un courant de coupage et/ou un courant d'arc pilote et/ou un écoulement de gaz plasma et/ou un écoulement de gaz protecteur ;
c) les informations communiquées entre le mécanisme d'identification (120) et le mécanisme de détection (205) indiquent un type de cartouche de la cartouche, éventuellement le type de cartouche correspondant à un profil de coupage personnalisé du système de coupage par plasma d'arc (200) ;
d) les informations communiquées entre le mécanisme d'identification (120) et le mécanisme de détection (205) comprennent une épaisseur de pièce à usiner ou sont corrélées avec une épaisseur de pièce à usiner ;
e) les informations sont communiquées à l'alimentation électrique (215) ;
f) le moyen de réglage d'au moins un paramètre de fonctionnement du système de coupage par plasma d'arc (200) comprend l'alimentation électrique (215) ; et
g) le système de coupage par plasma d'arc (200) établit des paramètres de fonctionnement multiples sur la base d'une combinaison particulière de composants consommables de la cartouche.

15. Cartouche selon la revendication 1, laquelle cartouche consiste en l'une d'une pluralité de cartouches consommables qui sont optimisées pour une tâche de coupage spécifique et sont optimisées pour des épaisseurs différentes de pièce à usiner.
